Europäisches Patentamt

European Patent Office

Office européen des brevets

(11) Publication number:

**0 207 021**
A2

## (12) EUROPEAN PATENT APPLICATION

(21) Application number: **86850166.9**

(51) Int. Cl.⁴: **F 16 K 15/14**

(22) Date of filing: **13.05.86**

(30) Priority: **13.06.85 SE 8502934**

(71) Applicant: **Flygt AB, Box 1309, S-171 25 Solna (SE)**

(43) Date of publication of application: **30.12.86**
**Bulletin 86/52**

(72) Inventor: **Leonardsson, Per-Erik, Björkebovägen 1,**
**S-144 00 Rönninge (SE)**

(84) Designated Contracting States: **AT CH DE FR GB IT LI NL**
**SE**

(74) Representative: **Larsson, Sten, Flygt AB Box 1309,**
**S-171 25 Solna (SE)**

(54) **A throttle and non-return valve.**

(57) The invention concerns a valve for controlling the liquid
exchange in a slot between two relative each other rotating
machine parts.

One of the parts (2) rotates with a shaft (1) relative the
other part (3). The space (5) is fed with rinsing fluid which
flows out through the slot (6). For controlling of said slot and
for preventing a return flow a sealing element (9), such as an
O-ring, is arranged in the slot (6).

ACTORUM AG

PE Leonardsson - 6

## THROTTLE AND NON-RETURN VALVE

The invention concerns a valve for controlling the liquid exchange in a slot between two relative each other rotating machine parts.

Some types of machines such as electric driven pumps and mixers are provided with one or several seals, usually mechanical seals, between the hydraulic unit and the driving unit. The seal prevents liquid from going along the driving shaft into the driving unit and cause damages in the latter.

A mechanical seal consists of two seal rings, one rotating and one non-rotating, which are pressed against each other. The seal is lubricated and cooled by the surrounding medium and are exposed to severe strain, especially if the medium contains big amounts of solid bodies. Because of the high pressure these solid bodies may enter between the seal surfaces and cause damages, thus creating a leakage.

In order to give the seal as good conditions as possible, a pure liquid, water, or even a gas could be brought to the seal surroundings. The polluted liquid is then held back from the seal surfaces and the risks for damages decrease.

The described mathod has however certain disadvantages. The pure medium which is fed, water or gas, costs money and may under same circumstances obtain a harmful dilution of the surrounding medium. The purpose of the invention is therefore to obtain a device which limits the necessary amount of rinsing medium and which prevents the surrounding liquid from flowing back into the seal area.

According to the invention this problem is solved by help of the device stated in the subsequent claims.

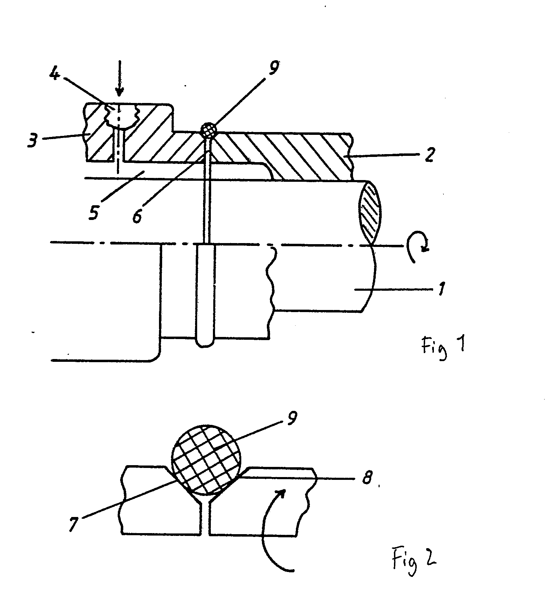

The invention is described more closely below with reference to the enclosed drawing. Fig 1 shows a device according to the invention, while fig 2 shows a detail of the device.

In the drawings 1 stands for a rotary shaft, 2 a hub rotating with the shaft and 3 a non-rotating machine part. 4 stands for a feeding opening for rinsing fluid into a space 5. 6 stands for a slot between the rotating and the non-rotating parts, 7 and 8 are chamfered surfaces and 9 a sealing element.

The mechanical seal, not shown, that shall be protected by help of pressurized rinsing liquid, is situated in the pressurized space 5. The rinsing liquid, water, flows out through the slot 6 between the rotating and the non-rotating parts 2 and 3 resp. In order to limit the flow through the slot 6 and prevent surrounding medium from going into the room 5, a flexible seal ring, such as an O-ring 9, is arranged over the slot 6. In order to secure that the O-ring is kept in its place, the two parts 2 and 3 have chamfered edges 8 and 7 resp towards the slot 6.

According to a preferred embodiment of the invention, one of the chamferings is steeper than the other. For instance one of the surfaces forms an angle with the plane of 40 to 90°, while the other surface forms an angle of 20° to 50° with said plane. By help of this is secured that the ring 9 always sticks to one of the chamfered surfaces, while the other surface rotates relative the ring 9. The wear of the ring can be neglected as the pressure from the rinsing liquid forms a slot between the ring 9 and the surface 7.

By help of the device according to the invention it becomes possible to keep a high pressure in the area of the machanical seal by help of a limited amount of rinsing liquid which otherwise would dilute the surrounding medium. At the same time the surrounded medium is effectively prevented from getting into the sealed space when the machine is stopped.

## CLAIMS

1.    A    throttle    and    non-return    valve, c h a r a c t e r i z e d   in  that  it is  designed  as  a ring  formed  flexible  seal  element,  such  as  an  O-ring, arranged  over  a  slot  between  a  rotating  and  a  non-rotating cylinderformed  machine  part,  the  slot  having  chamfered edges  so  that  the  seal  element,  at  least  partly,  is accomodated within the chamfered area.

2. A valve according to claim 1, c h a r a c t e r i z e d in that the chamfered parts have different inclinations, one of them forming an angle with the plane of 40-90°, while the other forms an angle of 20°-50° with said planes.

1/1

Fig 1

Fig 2